# EUROPÄISCHE PATENTSCHRIFT

(11) **EP 3 331 685 B1**
(45) Veröffentlichungstag und Bekanntmachung des Hinweises auf die Patenterteilung: **01.04.2020**
(21) Anmeldenummer: 16757817.8
(22) Anmeldetag: 02.08.2016
(51) Int. Cl.: B29C 65/16, B29C 65/78, B60R 19/48, B29L 31/30

(54) **MONTAGEVORRICHTUNG**
MOUNTING DEVICE
DISPOSITIF DE MONTAGE

(30) Priorität: 03.08.2015 DE 102015112699
(43) Veröffentlichungstag der Anmeldung: 13.06.2018
(73) Patentinhaber: JENOPTIK Automatisierungstechnik GmbH, 07745 Jena (DE)
(72) Erfinder: KRÄMER, Wilfried, 07747 Jena (DE); BÜCHEL, Andreas, 07768 Kahla (DE); MANZELLA, Christon, Waterford, MI 48328 (US)
(74) Vertreter: Schaller, Renate
(86) Internationale Anmeldenummer: PCT/DE2016/100351
(87) Internationale Veröffentlichungsnummer: WO 2017/020890

(56) Entgegenhaltungen:
- EP-A1- 1 798 019
- DE-A1- 19 911 890
- DE-A1-102010 014 721
- US-A1- 2014 150 978

## Beschreibung

Die Erfindung betrifft eine Montagevorrichtung zum Anbringen kleiner Bauteile, wie z. B. Sensorhalter für Einparkhilfesensoren oder Abstandssensoren, an großflächigen, dreidimensionalen Kunststoffteilen wie z. B. Stoßfängern.

Montagevorrichtungen dieser Art finden in der Automobilindustrie Anwendung, wo grundsätzlich in Großserien gefertigt wird und kurze Taktzeiten für die einzelnen Fertigungsschritte höchste Priorität haben.

Um eine kurze Taktzeit für die Montage von Sensorhaltern an einem Stoßfänger zu erreichen, werden die anzubringenden Sensorhalter zeitgleich montiert. Stoßfänger unterschiedlicher Fahrzeugtypen haben eine ähnliche Form mit einer unterschiedlichen Dimensionierung. Gegenüber einer Mittellinie, die bei einem am Fahrzeug montierten Stoßfänger vertikal verläuft, sind sie grundsätzlich symmetrisch, weisen aber insbesondere angepasst an verschiedene Fahrzeugbreiten unterschiedliche Längen auf. Zu ihren Enden hin sind sie abgewinkelt, wobei sich die Winkel zwischen dem jeweils gebildeten Mittelstück und den Endstücken fahrzeugtypisch unterscheiden können. Üblich ist die Anordnung von Sensoren und folglich von Sensorhaltern auf einer Geraden senkrecht zur Mittellinie, wobei sich die Anzahl der Sensoren und damit Sensorhalter und deren Abstände untereinander wieder abhängig vom Fahrzeugtyp unterscheiden können.

Eine handgeführte Vorrichtung zur Montage von Kunststoffteilen ist aus der Offenlegungsschrift DE 10 2010 014 721 A1 bekannt. Hier ist eine Laser-Schweißpistole mit einem Diodenlaser beschrieben. Die Laserstrahlung verlässt die Laser-Schweißpistole durch eine transparente Gehäuseöffnung, wobei die Laser-Schweißpistole gleichzeitig zum Andrücken der zu fügenden Kunststoffteile verwendet wird.

Die Offenlegungsschrift DE 199 11 890 A1 offenbart einen Sensorhalter, der mit einem Stoßfänger zu verschweißen ist. Zum Verschweißen wird dieser mit einer Vorrichtung gegenüber Öffnungen des Stoßfängers zentriert und angedrückt. Der Sensorhalter weist einen lasertransparenten Fügebereich auf, mit dem er am Stoßfänger anliegt. Mit einem auf den Fügebereich gerichteten Laser wird der Sensorhalter mit dem Stoßfänger verschweißt.

Aus der Offenlegungsschrift EP 1 798 019 A1 ist eine Vorrichtung zum Bearbeiten von großflächigen Werkstücken aus Kunststoff (z. B. Stoßfänger) bekannt, mit der nacheinander verschiedene Bearbeitungsschritte, u.a. Schweißen, ohne Lageänderung des Stoßfängers ausgeführt werden können. Dazu sind zu einem Modul zusammengefasste Aufnahmen, Spannmittel und Bearbeitungsstationen vorgesehen. Die Bearbeitungsstationen sind relativ zur Aufnahme positioniert und können ein oder mehrere verschiedene Werkzeuge tragen, mit denen der Stoßfänger gleichzeitig bearbeitet werden kann. Die Werkzeuge sind zweiteilig und zu beiden Seiten des Stoßfängers angeordnet. Sie können innerhalb der Bearbeitungsstation zugestellt und gewechselt werden. Die Zustellung erfolgt senkrecht zur Oberfläche des Stoßfängers. Zum Schweißen eines Sensorhalters wird der Sensorhalter auf einem Teil des Werkzeugs aufgenommen und positioniert und während des Schweißens gegen den zweiten Teil des Werkzeugs angedrückt.

Aus der US 2014/0150978 A1 ist eine Schweißvorrichtung bekannt, mit der gleichzeitig mehrere Bauteile an einem Stoßfänger montiert werden können.

Sie umfasst eine Werkbank mit einer sich darauf befindenden Aufnahme für einen Stoßfänger. Die Aufnahme ist angepasst an die Kontur des Stoßfängers, womit sie bei Andruck des Stoßfängers als Widerlager wirkt. Oberhalb der Aufnahme befindet sich eine Abdeckhaube, bestehend aus einem Gestell und transparenten Abdeckplatten, welche in einer abgesenkten Position einen auf der Aufnahme liegenden Stoßfänger an diese anlegt und einen nach oben geschlossenen Raum bildet. Innerhalb des geschlossenen Raumes sind an dem Gestell montierte Werkzeuge angebracht. Sie werden mit dem Absenken der Abdeckhaube aus einer Warteposition in eine Arbeitsposition geführt und so dem Stoßfänger zugestellt.

In einer anderen Ausführung weist die Aufnahme keine geschlossene Oberfläche als Gegenstück des Stoßfängers auf, sondern sie wird durch mehrere einzelne Stützen gebildet, die jeweils einem an dem Gestell angebrachten Werkzeug gegenüber angeordnet ist. Die Werkzeuge sind in einem Umfang beweglich, wie er für die Aufführung einer jeweiligen Schweißverbindung erforderlich ist.

Wo und wie Bauteile, welche mit dem Stoßfänger verschweißt werden sollen, an diesen während des Schweißens angedrückt werden, um einen erforderlichen Schweißdruck zu erzeugen, ist nicht offenbart.

Der Erfindung liegt die Aufgabe zugrunde, eine Montagevorrichtung zu schaffen, mit der mehrere Sensorhalter gleichzeitig unter Einwirkung eines Anpressdruckes mit einem Stoßfänger verschweißt werden können.

Bevorzugt soll die Montagevorrichtung an unterschiedliche Dimensionen von Stoßfängern, insbesondere deren unterschiedliche Längsachsen und unterschiedliche Abstände der Sensorhalter zueinander und zu einer Mittelachse des Stoßfängers anpassbar sein.

Die Aufgabe der Erfindung wird für eine Montagevorrichtung mit den Merkmalen des Anspruches 1 gelöst. Vorteilhafte Ausführungen sind in den Unteransprüchen offenbart.

Die Erfindung soll nachfolgend anhand von Zeichnungen näher erläutert werden.

Hierzu zeigen:
- Fig. 1: eine perspektivische Ansicht auf einen Stoßfänger von innen mit montierten Sensorhaltern,
- Fig. 2: eine Prinzipskizze einer ersten Ausführung einer Montagevorrichtung mit einer ersten Ausführung eines Niederhalters,
- Fig. 3: eine zweite Ausführung eines Niederhalters und
- Fig. 4: eine zweite Ausführung einer Montagevorrichtung.

Für die Entwicklung einer erfindungsgemäßen Montagevorrichtung waren durch Form, Dimension und Material der Stoßfänger 1 und der Sensorhalter 2 Rahmenbedingungen vorgegeben.

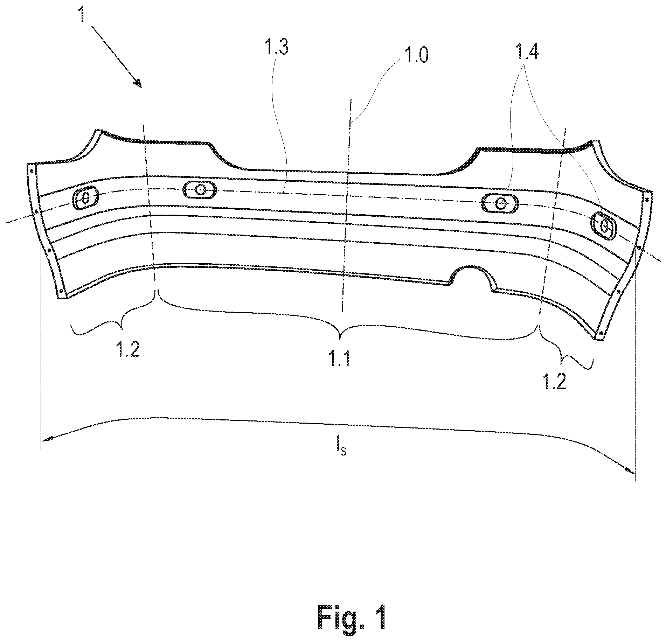

Bei einem Stoßfänger 1, siehe Fig. 1, handelt es sich, wie einleitend dargelegt, um ein großflächiges, dreidimensionales Kunststoffteil. Ausgehend von einer typischen Raumlage eines an einem Fahrzeug montierten Stoßfängers 1 weist dieser über eine Höhe eine Vertikallinie 1.0 und über eine Stoßfängerlänge l_{S}, die hauptsächlich durch die Breite des Fahrzeugs bestimmt ist, eine Horizontallinie 1.3, als Schnittlinie einer horizontalen Ebene mit dem am Fahrzeug montierten Stoßfänger 1, auf. Gegenüber der Vertikallinie 1.0 ist der Stoßfänger 1 symmetrisch ausgebildet.

Die Stoßfänger 1 unterschiedlicher Fahrzeuge, sosehr sie sich in ihrem Design unterscheiden können, haben eine wenigstens nahezu gleiche Form der Horizontallinie 1.3. Sie ist über ein Mittelstück 1.1 plan oder höchstens leicht konvex gekrümmt, das in zwei Endstücke 1.2 ausläuft, die häufig zum Mittelstück 1.1 abgewinkelt sind. Die Länge des Mittelstückes 1.1 und die Längen der beiden Endstücke 1.2, die gemeinsam die Stoßfängerlänge l_{S} bilden, sowie der Winkel, den die Endstücke 1.2 jeweils mit dem Mittelstück 1.1 einschließen, können voneinander in einem Maße abweichen, wie die Breiten und Formen der Fahrzeuge voneinander abweichen können. Stoßfänger 1 werden üblicherweise aus Kunststoff gefertigt, womit sie gut geeignet sind, um an ihnen Bauteile mittels Transmissionsschweißverfahren zu befestigen.

Zur Befestigung von Sensoren an einem Stoßfänger 1 sind in den Stoßfänger 1 entsprechend der vorgesehenen Anzahl und der vorgesehenen Positionen der Sensoren Löcher 1.4 eingebracht, hinter oder in denen Sensorhalter 2 jeweils in einer Schweißposition 4.1 angebracht werden.

Mit der erfindungsgemäßen Vorrichtung sollen in einem so vorgefertigten Stoßfänger 1 Sensorhalter 2 angeordnet und verschweißt werden.

Die Sensorhalter 2 bestehen aus einem Hohlzylinder 2.1 mit einer Zylinderachse 2.1.1 und einer den Hohlzylinder 2.1 umschließenden, senkrecht zu diesem angeordneten Montageplatte 2.2. Sie sind entweder vollständig oder teilweise wenigstens in Teilbereichen der Montageplatte 2.2 aus einem für eine Laserstrahlung transparenten Material.

Die erfindungsgemäße Montagevorrichtung ist an diese Rahmenbedingungen angepasst.

Die Montagevorrichtung weist unabhängig von den verschiedenen möglichen Ausführungsformen eine Werkbank 3 auf, mit einer sich daran oder darauf befindenden Aufnahme 4 für einen Stoßfänger 1 und mit einem auf die Aufnahme 4 zustellbaren Gestell 5.

Der Begriff Werkbank 3 ist hier im weitesten Sinne als eine Basis zu verstehen, gegenüber der die Aufnahme 4 fest und eine Bearbeitungseinheit 9 in Richtung auf die Aufnahme 4 hin zwischen einer Ruhe- und einer Arbeitsposition bewegbar angeordnet sind.

Die Werkbank 3 und die Aufnahme 4 sind grundsätzlich für das Betreiben der Montagevorrichtung erforderlich, müssen aber nicht zwingend als zur Montagevorrichtung gehörig gesehen werden.

Das Kernstück der Montagevorrichtung wird durch die Bearbeitungseinheit 9 gebildet. Sie enthält das Gestell 5, eine Gestelllänge l_{G} aufweisend, und eine gleiche Anzahl von Distanzstücken 7, wie Schweißpositionen 4.1 gegeben sind und die in einer Arbeitsposition des Gestells 5 jeweils gegenüber einer der Schweißpositionen 4.1 positioniert sind.

An den Distanzstücken 7 befinden sich frei strahlende Diodenlaser 6.

Als Gestelllänge l_{G} ist die Ausdehnung des Gestells 5 in Richtung der Horizontallinie 1.3 eines sich in der Aufnahme 4 befindenden Stoßfängers 1 zu verstehen, wenn sich das Gestell 5 in der Arbeitsposition befindet.

Die Schweißpositionen 4.1 sind jeweils die Positionen auf der Aufnahme 4, in denen sich bei einem aufgelegten Stoßfänger 1 die Löcher 1.4 befinden, zu denen die Sensorhalter 2 ausgerichtet angeschweißt werden, sodass die Lochachsen zu den Zylinderachsen 2.1.1 der Sensorhalter 2 fluchtend angeordnet sind. Vorteilhaft ragen die Hohlzylinder 2.1 durch die Montageplatten 2.2 hindurch, mit einem Außendurchmesser geringfügig kleiner dem Innendurchmesser der Löcher 1.4, sodass die Sensorhalter 2 in die Löcher 1.4 eingeführt werden können. Die Löcher 1.4 sind grundsätzlich spiegelsymmetrisch von der Vertikallinie 1.0 ausgehend in vorgegebenen Abständen entlang der Horizontallinie 1.3 eingebracht. Diese Abstände können sich für die Stoßfänger 1 unterschiedlicher Fahrzeuge unterscheiden. Auch in der Anzahl können sie sich unterscheiden. Typischerweise werden vier oder sechs Sensorhalter 2 montiert. Die Horizontallinie 1.3 muss nicht zwingend eine Mittellinie sein, welche den Stoßfänger 1 längs in gleichbreite Teile unterteilt, zumal Stoßfänger 1 heutzutage kaum noch symmetrisch zu einer Horizontallinie 1.3 ausgebildet sind.

Die an dem Gestell 5 angebrachten Distanzstücke 7 weisen jeweils eine Distanzstückachse 7.1 auf, entlang der zu deren freien Ende hin hintereinander ein bzw. zwei Diodenlaser 6 in einer Abstrahlebene und ein Niederhalter 8 angebracht sind.

Die Niederhalter 8 weisen jeweils einen Greifer 8.1, bevorzugt ein Zentrierdorn, zum Einführen in den Hohlzylinder 2.1 eines der Sensorhalter 2 und ein Niederhalterelement 8.2 zur Anlage an dessen Montageplatte 2.2 auf, wobei die Niederhalterelemente 8.2 wenigstens bereichsweise für eine von den Diodenlasern 6 abgegebene Laserstrahlung transparent sind.

Die Sensorhalter 2 werden in einer Ruheposition der Bearbeitungseinheit 9 über die Greifer 8.1 aufgenommen, indem sie mittels des Hohlzylinders 2.1 auf diese aufgesteckt werden. Dabei wird das Niederhalterelement 8.2 an die Montageplatte 2.2 des Sensorhalters 2 angelegt. Die Zylinderachse 2.1.1 des Sensorhalters 2 und die Achse des Greifers 8.1, die zur Distanzstückachse 7.1 fluchten, fallen zusammen und verlaufen in der Arbeitsposition der Bearbeitungseinheit 9 senkrecht durch den Mittelpunkt des Loches 1.4.

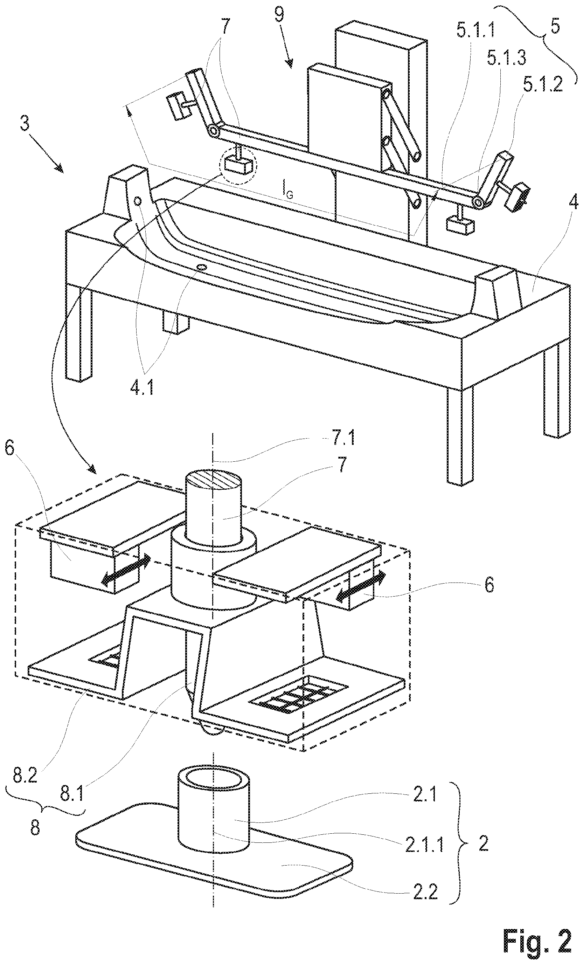

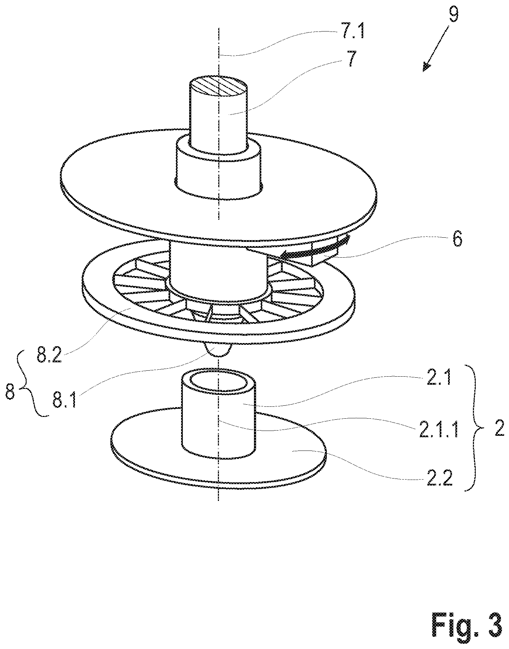

In der Arbeitsposition wird die Bearbeitungseinheit 9 gegen die Aufnahme 4 gedrückt, wobei die Niederhalterelemente 8.2 unmittelbar auf die Montageplatten 2.2 der Sensorhalter 2 drücken, sodass diese mit einer zum Verschweißen erforderlichen Andruckkraft auf den in der Aufnahme 4 gehaltenen Stoßfänger 1 gedrückt werden. Damit eine von den Diodenlasern 6 emittierte Laserstrahlung auf die Montageplatten 2.2 auftreffen kann, sind die Niederhalterelemente 8.2 in Teilbereichen für die Laserstrahlung durchlässig. Diese Teilbereiche können aus transparentem Material oder durch Fenster gebildet sein, mit und ohne eine innen liegende Gitterstruktur. Um diese Teilbereiche voll mit Laserstrahlung auszuleuchten, kann ein Diodenlaser 6 theoretisch mit einer angepassten Öffnung flächig abstrahlen, was dann allerdings sehr hohe Laserleistungen abverlangt. Praktisch wird als Diodenlaser 6 eine Zeilenanordnung von Laserdioden verwendet, welche eine Laserlinie abstrahlt, die über die Teilbereiche geführt wird. Zu diesem Zweck ist der Diodenlaser 6 an dem Distanzstück 7 horizontal beweglich angebracht. Entsprechend den in Fig. 2 und Fig. 3 gezeigten Ausführungsbeispielen für den Niederhalter 8 sind zwei Diodenlaser 6 entweder linear beweglich in einer senkrechten Richtung zur Ausrichtung der Zeilenanordnung oder aber ein Diodenlaser 6 ist um die Distanzstückachse 7.1 drehbar, um in beiden Fällen eine Fläche zu überstreichen, in der der Sensorhalter 2 mit dem Stoßfänger 1 verschweißt wird.

Die Distanzstücke 7 weisen jeweils eine Länge auf, die es erlaubt, dass alle aufgesteckten Sensorhalter 2 zeitgleich an den Stoßfänger 1 angelegt werden.

Vorteilhaft sind die Niederhalter 8 gegenüber den Distanzstücken 7 gefedert angebracht, womit die Andruckkraft über den Zustellweg feinfühlig erhöht und Toleranzen ausgeglichen werden können.

Die Distanzstücke 7 können vorteilhaft auch über ihre Länge, z. B. durch eine Ausführung als Teleskopstangen, veränderbar sein, um die Bearbeitungseinheit 9 an unterschiedliche Stoßfänger 1 anzupassen, bei denen die Horizontallinie 1.3 von einer Geraden abweicht.

Die Distanzstücke 7 können auch vollständig oder teilweise durch einen Hubzylinder gebildet sein. Hierfür eignen sich insbesondere elektromechanische Hubzylinder, aber auch hydraulische oder pneumatische Zylinder, mit denen in Richtung der Distanzstückachse 7.1 ein Druck erzeugt werden kann.

Um unterschiedliche Stoßfänger 1 bearbeiten zu können, ist die Aufnahme 4 austauschbar gegen andere Aufnahmen 4, die jeweils in ihrer Kontur an einen anderen Stoßfänger 1 angepasst sind, sodass der Stoßfänger 1 wenigstens in Bereichen um die Löcher 1.4 aufliegt und die Aufnahme 4 beim Andruck durch die Bearbeitungseinheit 9 als Gegenlager wirkt. Das Gestell 5 ist entsprechend in seiner Gestelllänge l_{G} veränderbar, um es an die unterschiedlichen Aufnahmen 4 jeweils anpassen zu können, wobei die Distanzstücke 7 an oder mit dem Gestell 5 zueinander verschiebbar angebracht sind.

Im einfachsten Fall kann das Gestell 5, wie in Fig. 1 gezeigt, durch eine Mittelstange 5.1.1 und zwei gegenüber der Mittelstange 5.1.1 abgewinkelt angeordnete Endstangen 5.1.2 gebildet sein, wobei die Mittelstange 5.1.1 und die Endstangen 5.1.2 auch aus einem Stück gefertigt sein können. Eine Anpassung der Bearbeitungseinheit 9 an unterschiedliche Stoßfänger 1 ist dann nur möglich, indem die Distanzstücke 7 am Gestell 5 an unterschiedlichen Positionen entlang der Gestelllänge l_{G} angebracht werden, die den entsprechenden Schweißpositionen 4.1 entsprechen.

Vorteilhaft ist die Mittelstange 5.1.1 mit den Endstangen 5.1.2 jeweils über ein Knickgelenk 5.1.3 verbunden, womit der üblichen Form der Stoßfänger 1 Rechnung getragen wird, die zum Teil stark abgewinkelte Entstücken 1.2 aufweisen, in denen ebenfalls Löcher 1.4 für eine Montage von Sensorhaltern 2 vorgesehen sind. Über die Verstellung des Winkels, den die Mittelstange 5.1.1 jeweils mit den Endstangen 5.1.2 einschließt, wird erreicht, dass die auf die Endstangen 5.1.2 gerichteten Distanzstückachsen 7.1 in der Arbeitsposition senkrecht zum Stoßfänger 1 verlaufen.

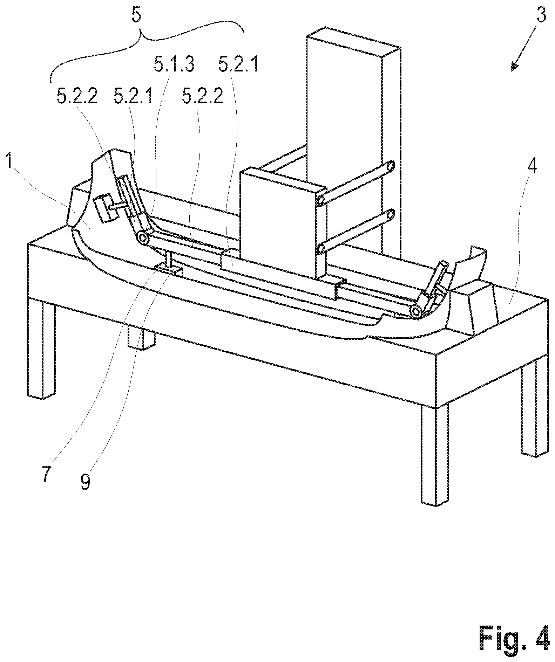

Alternativ kann, wie in Fig. 4 gezeigt, das Gestell 5 für eine flexible Anpassung an unterschiedliche Stoßfänger 1 durch ein Teleskopstangensystem gebildet sein: In einer einfachen Ausführung weist das Gestell 5 anstelle der Mittelstange 5.1.1 eine Teleskopstange, gebildet aus drei Stangen, auf, nämlich eine mittlere Hohlzylinderstange 5.2.1 und zwei in dieser gegensinnig koaxial geführte Zylinderstangen 5.2.2. Anstelle der Endstangen 5.1.2 weist es Teleskopstangen jeweils mit zwei Stangen auf, nämlich eine Hohlzylinderstange 5.2.1 und eine in dieser geführte Zylinderstange 5.2.2. Die Teleskopstangen können jeweils auch aus mehr als zwei bzw. drei ineinander geführten Stangen gebildet sein. Indem die Distanzstücke 7 jeweils an einer der Stangen angebracht sind, können sie innerhalb des Gestells 5 in unterschiedliche Abstände zueinander verschoben werden und somit in ihrer Position an unterschiedliche Lochpositionen der Stoßfänger 1 und damit an unterschiedliche Schweißpositionen 4.1 angepasst werden.

Vorteilhaft ist jeweils eine der Stangen einer der Teleskopstangen abgewinkelt oder weist ein verstellbares Knickgelenk 5.1.3 auf. Alternativ sind die Teleskopstangen vorteilhaft über Knickgelenke 5.1.3 miteinander verbunden.

### Bezugszeichenliste

- 1: Stoßfänger
- 1.0: Vertikallinie
- 1.1: Mittelstück (des Stoßfängers 1)
- 1.2: Endstück (des Stoßfängers 1)
- 1.3: Horizontallinie
- 1.4: Loch
- 2: Sensorhalter
- 2.1: Hohlzylinder
- 2.1.1: Zylinderachse
- 2.2: Montageplatte
- 3: Werkbank
- 4: Aufnahme
- 4.1: Schweißposition
- 5: Gestell
- 5.1.1: Mittelstange
- 5.1.2: Endstange
- 5.1.3: Knickgelenk
- 5.2.1: Hohlzylinderstange
- 5.2.2: Zylinderstange
- 6: Diodenlaser
- 7: Distanzstück
- 7.1: Distanzstückachse
- 8: Niederhalter
- 8.1: Greifer
- 8.2: Niederhalterelement
- 9: Bearbeitungseinheit

- l_{S}: Stoßfängerlänge
- l_{G}: Gestelllänge

## Patentansprüche

1. Montagevorrichtung zum gleichzeitigen Verschweißen von mehreren Sensorhaltern (2) mit einem Stoßfänger (1) unter Einwirkung eines Anpressdruckes, wobei der Stoßfänger (1) eine zu einer Vertikallinie (1.0) spiegelsymmetrische Horizontallinie (1.3) mit einer Stoßfängerlänge (lₛ) aufweist, entlang der Löcher (1.4) in den Stoßfänger (1) eingebracht sind, um die jeweils einer der Sensorhalter (2) simultan angeschweißt werden kann, und die Sensorhalter (2) jeweils aus einem Hohlzylinder (2.1) mit einer Zylinderachse (2.1.1) und einer hierzu senkrecht ausgebildeten Montageplatte (2.2) gebildet sind,
enthaltend eine Werkbank (3) verbunden mit einer Aufnahme (4), die für den Stoßfänger (1) ausgelegt ist, sodass die Löcher (1.4) jeweils in einer Schweißposition (4.1) gehalten sind, und mit einer auf die Aufnahme (4) zustellbaren Bearbeitungseinheit (9), die eine gleiche Anzahl von Schweißwerkzeugen aufweist, wie Schweißpositionen (4.1) vorhanden sind und die in einer Arbeitsposition eines Gestells (5) jeweils gegenüber einer der Schweißpositionen (4.1) positioniert sind, **dadurch gekennzeichnet, dass**
die Bearbeitungseinheit (9) das Gestell (5) mit einer Gestelllänge (l_{G}) enthält, an dem Distanzstücke (7), jeweils eine Distanzstückachse (7.1) aufweisend, angebracht sind, die in der Arbeitsposition senkrecht auf die Aufnahme (4) gerichtet ist,
wobei an den freien Enden der Distanzstücke (7) Niederhalter (8) angebracht sind und die Schweißwerkzeuge jeweils durch mindestens einen frei strahlenden Diodenlaser (6) gebildet sind, der oberhalb der Niederhalter (8) jeweils an einem der Distanzstücke (7) angeordnet ist,
die Niederhalter (8) jeweils einen Greifer (8.1) zum Einführen in den Hohlzylinder (2.1) eines der Sensorhalter (2) und ein Niederhalterelement (8.2) zur Anlage an dessen Montageplatte (2.2) aufweisen, wobei das Niederhalterelement (8.2) wenigstens bereichsweise für eine von dem mindestens einen Diodenlaser (6) abgegebene Laserstrahlung transparent ist.

2. Montagevorrichtung nach Anspruch 1, **dadurch gekennzeichnet, dass** die Niederhalter (8) gegenüber den Distanzstücken (7) gefedert angebracht sind

3. Montagevorrichtung nach Anspruch 1, **dadurch gekennzeichnet, dass** die Aufnahme (4) durch eine andere Aufnahme (4), die auf einen anderen Stoßfänger (1) mit einer anderen Stoßfängerlänge (lₛ) angepasst ist, austauschbar ist und das Gestell (5) in seiner Gestelllänge (l_{G}) veränderbar ist, wobei die Distanzstücke (7) an oder mit dem Gestell (5) verstellbar angebracht sind.

4. Montagevorrichtung nach Anspruch 3, **dadurch gekennzeichnet, dass** das Gestell (5) durch eine Mittelstange (5.1.1) und zwei gegenüber der Mittelstange (5.1.1) abgewinkelt angeordnete Endstangen (5.1.2) gebildet ist.

5. Montagevorrichtung nach Anspruch 4, **dadurch gekennzeichnet, dass** die Mittelstange (5.1.1) mit den Endstangen (5.1.2) jeweils über ein Knickgelenk (5.1.3) verbunden ist.

6. Montagevorrichtung nach Anspruch 3, **dadurch gekennzeichnet, dass** das Gestell (5) durch ein Teleskopstangensystem, umfassend mehrere Teleskopstangen, gebildet ist, wobei jede Teleskopstange eine Hohlzylinderstange (5.2.1) und wenigstens eine in dieser geführte Zylinderstange (5.2.2) umfasst.

7. Montagevorrichtung nach Anspruch 6, **dadurch gekennzeichnet, dass** die Teleskopstangen jeweils über ein verstellbares Knickgelenk (5.1.3) miteinander verbunden sind.

## Claims

1. A mounting device for simultaneous welding of several sensor holders (2) to a bumper (1) under contact pressure, wherein the bumper (1) comprises a horizontal line (1.3), extending in a mirror-symmetrical manner with respect to a vertical line (1.0) and having a bumper length (lₛ), along which horizontal line (1.3) holes (1.4) are formed in the bumper (1), around which each respective sensor holder (2) can be welded simultaneously, and the sensor holders (2) are each formed by a hollow cylinder (2.1) with a cylinder axis (2.1.1) and a mounting plate (2.2) formed perpendicularly to said cylinder axis (2.1.1),
including a workbench (3) connected to a holding fixture (4) that is configured for the bumper (1) such that the holes (1.4) are respectively held in a welding position (4.1), and comprising a processing unit (9) which is adjustable to the holding fixture (4) and has as many welding tools as there are welding positions (4.1), each welding tool being positioned opposite a respective one of the welding positions (4.1) in a working position of a frame (5),
**characterised in that**
the processing unit (9) includes the frame (5) which has a frame length (l_{G}) and to which spacers (7) are attached, each having a spacer axis (7.1) which is perpendicular to the holding fixture (4) in the working position,
wherein hold-down devices (8) are attached to the free ends of the spacers (7) and the welding tools are each formed by at least one freely radiating diode laser (6) arranged above the hold-down devices (8) at a respective one of the spacers (7),
the hold-down devices (8) each have a gripper (8.1), for insertion into the hollow cylinder (2.1) of one of the sensor holders (2) and a hold-down element (8.2) designed to contact the mounting plate (2.2) thereof, wherein the hold-down element (8.2) is transparent, at least in some areas, for laser radiation emitted by the at least one diode laser (6).

2. The mounting device according to claim 1, **characterised in that** the hold-down devices (8) are spring-mounted with respect to the spacers (7).

3. The mounting device according to claim 1, **characterised in that** the holding fixture (4) is replaceable by another holding fixture (4) adapted to another bumper (1) with another bumper length (lₛ) and the frame (5) is variable in its frame length (l_{G}), with the spacers (7) being mounted so as to be adjustabe on or with the frame (5).

4. The mounting device according to claim 3, **characterised in that** the frame (5) is formed by a central rod (5.1.1) and two end rods (5.1.2) arranged at an angle with respect to the central rod (5.1.1).

5. The mounting device according to claim 4, **characterised in that** the central rod (5.1.1) is connected to each of the end rods (5.1.2) by a respective articulated joint (5.1.3).

6. The mounting device according to claim 3, **characterised in that** the frame (5) is formed by a telescopic rod system comprising several telescopic rods, wherein each telescopic rod comprises a hollow cylinder rod (5.2.1) and at least one cylinder rod (5.2.2) guided therein.

7. The mounting device according to claim 6, **characterised in that** the telescopic rods are connected to each other by an articulated joint (5.1.3).

## Revendications

1. Dispositif de montage pour le soudage simultané de plusieurs supports de capteurs (2) sur un pare-chocs (1) sous l'action d'une pression de contact, le pare-chocs (1) présentant une ligne horizontale (1.3) symétrique par rapport à une ligne verticale (1.0) et une longueur de pare-chocs (ls) le long de laquelle des trous (1.4) sont réalisés dans le pare-chocs (1), autour desquels un des supports de capteurs (2) peut être soudé simultanément, et les supports de capteurs (2) sont formés chacun d'un cylindre creux (2.1) avec un axe de cylindre (2.1.1) et une plaque de montage (2.2) construite perpendiculairement à celui-ci, contenant un établi (3) relié à un logement (4) qui est conçu pour le pare-chocs (1), de sorte que les trous (1.4) sont chacun maintenus dans une position de soudage (4.1), et avec une unité d'usinage (9) qui peut être avancée vers le logement (4), qui possède un nombre d'outils de soudage égale aux positions de soudage (4.1), et qui, dans une position de travail d'un cadre (5), sont chacun positionnés en face de l'une des positions de soudage (4.1),
**caractérisé en ce que**
l'unité de traitement (9) contient le cadre (5) avec une longueur de cadre (l_{G}), sur lequel sont fixées des entretoises (7), chacune présentant un axe d'entretoise (7.1), qui en position de travail est dirigé perpendiculairement au logement (4), dans lequel des organes de retenue (8) sont fixés aux extrémités libres des entretoises (7) et les outils de soudage sont formés chacun par au moins un laser à diode à rayonnement libre (6), qui est disposé au-dessus des organes de retenue (8) à chaque fois sur l'une des entretoises (7),
les organes de retenue (8) présentent chacun un grappin (8.1) pour l'insertion dans le cylindre creux (2.1) de l'un des supports de capteur (2) et un élément de retenue (8.2) pour l'appui contre la plaque de montage (2.2) de celui-ci, l'élément de retenue (8.2) étant transparent au moins par zones pour le rayonnement laser émis par l'au moins un laser à diode (6).

2. Dispositif selon la revendication 1, **caractérisé en ce que** les organes de retenue (8) sont montés sur ressort par rapport aux entretoises (7).

3. Dispositif de montage selon la revendication 1, **caractérisé en ce que** le logement (4) est échangeable par un autre logement (4) adapté à un autre pare-chocs (1) avec une longueur de pare-chocs (lₛ) différente et le cadre (5) est variable dans sa longueur de cadre (l_{G}), les entretoises (7) étant montées de manière réglable sur ou avec le cadre (5).

4. Dispositif de montage selon la revendication 3, **caractérisé en ce que** le cadre (5) est formé par une tige centrale (5.1.1) et deux tiges d'extrémité (5.1.2) qui sont disposées en angle par rapport à la tige centrale (5.1.1).

5. Dispositif de montage selon la revendication 4, **caractérisé en ce que** la tige centrale (5.1.1) est reliée aux tiges d'extrémité (5.1.2) à chaque fois par une articulation (5.1.3).

6. Dispositif de montage selon la revendication 3, **caractérisé en ce que** le cadre (5) est formé par un système de tiges télescopiques comprenant plusieurs tiges télescopiques, chaque tige télescopique comprenant une tige cylindrique creuse (5.2.1) et au moins une tige cylindrique (5.2.2) guidée dans celle-ci.

7. Dispositif de montage selon la revendication 6, **caractérisé en ce que** les tiges télescopiques sont chacune reliées entre elles par une articulation réglable (5.1.3).
